# EUROPEAN PATENT SPECIFICATION

(11) **EP 0 364 984 B1**
(45) Date of publication and mention of the grant of the patent: **13.07.1994**
(21) Application number: 89119346.8
(22) Date of filing: 18.10.1989
(51) Int. Cl.: G01B 9/02, G01D 5/38

(54) **Interferometer using multi-mode semiconductor laser**
Multimoden-Halbleiterlaser-Interferometer
Interféromètre utilisant un laser multimode à semiconducteur

(30) Priority: 19.10.1988 JP 264687/88
(43) Date of publication of application: 25.04.1990
(73) Proprietor: CANON KABUSHIKI KAISHA, Tokyo (JP)
(72) Inventor: Ishizuka, Ko, Urawa-shi Saitama-ken (JP); Nishimura, Tetsuharu, Kawasaki-shi Kanagawa-ken (JP); Kubota, Yoichi, Kawasaki-shi Kanagawa-ken (JP); Tsukiji, Masaaki, Tokyo (JP); Ishii, Satoshi, Tokyo (JP)
(74) Representative: Tiedtke, Harro, Dipl.-Ing.

(56) References cited:
- EP-A- 0 065 429
- EP-A- 0 146 244
- GB-A- 1 364 563
- GB-A- 2 187 282
- OPTICS LETTERS, vol. 13, no. 8 August 1988, pages 628-630, New York, US; W.-K. Chen et al: "Short-coherence-length and high-coupling-efficiency pulsed diode laser for fiber-optic sensors"

## Description

### BACKGROUND OF THE INVENTION

### Field of the Invention

This invention relates to an interferometer having a multi-mode semiconductor laser used as a light source and, more particularly, to an interferometer which irradiates a moving diffraction grating with laser light, forms interference light from diffracted light emerging from the diffraction grating and measures the interference light.

### Description of the Prior Art

A type of encoder is well known which detects the displacement of a scale by superposing diffracted lights emerging from a diffraction grating formed on the scale to form interference light and converting the same into an electrical signal. The periodic signal obtained by this type of encoder has improved resolution compared with encoders using the ordinary combination of a main scale and an index scale. However, to use interference light for detection of displacement, the conditions for the occurrence of the interference of light must be established. In general, if the difference between the optical paths of two light beams to be made to interfere with each other (the difference between the times taken to reach the interfering position from the light source) is zero, the intensity of the interference signal is maximized irrespective of the type of light source. However, as the width of the spectrum of the light source (spectral width) becomes wider, the intensity of interference light decreases abruptly due to the slight difference between the optical paths of the two light beams. Lasers which emit light of very small spectral widths have, therefore, been used as light sources for interferometers, including the above-mentioned type of encoder, utilizing interference light. Specifically, semiconductor lasers have many advantages, for example, that of being reduced in size and requiring a reduced driving current, and they therefore contribute to reductions in the overall size and the production cost of interferometers if they are incorporated therein as light sources.

However, the following problems are encountered when semiconductor lasers are used as light sources for interferometers.

Semiconductor lasers include a single mode laser having one oscillation spectrum mode and a multi-mode laser having a plurality of oscillation spectrum modes. A single mode laser has improved interference performance (has a larger coherence length) but changed discontinuously with changes in operating temperature and driving current so that the phase of the interference signal changes discontinuously, resulting in errors in detecting changes in the intensity of interference light by counting periodic signals corresponding to these changes. For prevention of this phenomenon, it is necessary to add a system for accurately controlling the operating temperature and the driving current. The provision of such means necessarily makes the interferometer larger, more complicated and more expensive.

On the other hand, multi-mode lasers ordinarily have shorter coherence lengths and various oscillation spectra. Their interference performance is therefore unstable. For this reason, they cannot be easily utilized in interferometers.

From document EP 0 146 244 an optical instrument for measuring displacements is known wherein a multi-mode semiconductor laser is utilized to a linear encoder using a diffraction grating. However, this multi-mode semiconductor laser is not used for measuring the displacement of the diffraction grating but for adjusting an optical-path difference to zero taking advantage of the lower coherence of a multi-mode semiconductor laser but clearing its influence by changing the wavelength of the light source. That is, according to document EP 0 146 244 the multimode semiconductor laser is used only during adjustment of the optical system.

However, as already indicated above it is difficult to keep a desired accuracy of the interferometer if a single mode laser is used as light source for the interferometer. That is, a mode whip may occur due to changes of the environment such as temperature changes.

On the other hand, if a light source having shorter coherence lengths is used for the interferometer, a highly accurate adjustment of the optical path is needed and a measurement error due to the change of the optical path may be caused by changes of the environment etc.

Therefore, it is an object of the present invention to avoid the mode whip and to avoid the measurement error which is caused due to the change of the optical path.

According to the principle of the invention a laser beam is generated by a multi-mode semiconductor laser, said laser beam having at least five vertical modes each having an intensity ratio with respect to a maximum vertical mode peak of at least 0.05, and said laser beam having an envelope which envelopes peaks of the respective vertical modes each having an intensity ratio of at least 0.05 with respect to a maximum vertical mode peak in the oscillation spectrum and said envelope having a width of no greater than 6 nm. Thus, a more accurate measurement is realized.

In detail, the object of the present invention can be achieved by an apparatus for measuring the displacement of a diffraction grating, comprising: optical means for directing a laser beam from a laser to said diffraction grating and causing first and second diffracted light beams generated at said diffraction grating to interfere with each other to generate interference light, with the phase of said interference light changing accordingly to said displacement of said diffraction grating; and conversion means for converting said interference light supplied by said optical means into an electrical signal to measure said displacement of said diffraction grating, characterized in that said laser beam is generated by a multi-mode semiconductor laser and has at least five vertical modes each having an intensity ratio with respect to a maximum vertical mode peak of at least 0.05, and said laser beam has an envelope which envelopes peaks of the respective vertical modes each having an intensity ratio of at least 0.05 with respect to a maximum vertical mode peak in the oscillation spectrum and which envelope has a width of no greater than 6 nm.

Furthermore, the object of the present invention can be achieved by an apparatus for measuring the displacement of a diffraction grating, comprising: a semiconductor laser for generating a laser beam; optical means for splitting said laser beam generated by said laser into first and second beams, for directing said first and second beams to said diffraction grating, and for effecting interference between a first diffracted light beam generated by diffraction of said first beam at said diffraction grating and a second diffracted light beam genereated by diffraction of said second beam at said diffraction grating to produce interference light, with the phase of said interference light changing accordingly to said displacement of said diffraction grating; and conversion means for converting said interference light produced by said optical means into an electrical signal to measure said displacement of said diffraction grating characterized in that said laser is a multi-mode semiconductor laser which is supplied with a predetermined current by supply means so that at least five vertical modes occur in an oscillation spectrum of said laser beam generated by said laser at an intensity ratio with respect to a maximum vertical mode peak of at least 0.05, and said laser beam has an envelope which envelopes peaks of the respective vertical modes each having an intensity ratio of at least 0.05 with respect to a maximum vertical mode peak in the oscillation spectrum and which envelope has a width of no greater than 6 nm.

Furthermore, the object of the present invention can be achieved by a method of measuring the displacement of a diffraction grating, comprising the steps of: directing to said diffraction grating laser radiation; forming interference light by diffraction beams generated at said diffraction grating, with the phase of said interference light changing accordingly to said displacement of said diffraction grating; and converting the interference beam into an electrical signal to measure said displacement of said diffraction grating, characterized in that said laser radiation is effected by means of a laser operated to produce a predetermined spectrum having at least five vertical modes each having an intensity ratio with respect to a maximum vertical mode peak of at least 0.05, and said laser radiation has an envelope which envelopes peaks of the respective vertical modes each having an intensity ratio of at least 0.05 with respect to a maximum vertical mode peak in the oscillation spectrum and which envelope has a width of no greater than 6 nm.

Furthermore, the object of the present invention can be achieved by an encoder having a diffraction grating scale, comprising: a semiconductor laser generating a laser beam; optical means for splitting said laser beam generated by said laser into first and second beams, for directing said first and second beams to first and second positions on said diffraction grating, and for effecting interference between a first diffracted light beam from said first position and a second diffracted light beam from said second position to produce interference light with the phase of said interference light changing accordingly to a displacement of said diffraction grating; and conversion means for converting said interference light produced by said optical means into an electrical signal and measuring said displacement of said diffraction grating; characterized in that said encoder is an rotary encoder with said diffraction grating being a rotary scale formed along a rotation direction; said laser is a multi-mode semiconductor laser which generates said laser beam so that said beam has at least five vertical modes each having an intensity ratio with respect to a maximum vertical mode peak of at least 0.05; said laser beam has an envelope which envelopes peaks of the respective vertical modes each having an intensity ratio of at least 0.05 with respect to a maximum vertical mode peak in the oscillation spectrum and which envelope has a width of no greater than 6 nm; and said displacement to be measured is a rotation of said rotary scale.

In a preferred form of the present invention, the semiconductor laser is adjusted so as to satisfy additionally the following condition:
the half width of each of the at least five vertical modes is set to 0.03 nm or more.

In accordance with the present invention, a multi-mode semiconductor laser is used, as the laser, in a suitable manner to ensure that the amplitude of the interference signal (contrast) is stable during assembly or measurement, and that even if the optical path difference is changed by thermal expansions of the frame of the interferometer due to changes in the environmental temperature, the reduction in the amplitude of the interference signal is small and the occurrence of a discontinuity in the signal phase can be avoided.

The interferometer comprises a multi-mode semiconductor laser generating a laser beam having at least five vertical modes having an intensity ratio of at least 0.05, generation means for generating an interference light beam from a laser beam supplied from the laser, and detection means for detecting the interference light beam. The laser is constructed to generate a laser beam having an envelop that envelopes peaks of the respective vertical modes of the oscillation spectrum of the laser beam, such that the envelops has a width of no greater than 6 nm. The laser is also constructed so as to generate a laser beam such that the width of each of the at least five vertical modes is at least 0.03 nm, and has a coherency length of at least 100 »m. The generation means can include an optical system for splitting the laser beam into first and second beams and superposing the first and second beams. The detection means can include a photodetector capable of converting the interference light into electricity to generate a predetermined signal. The interferometer can also include means for supplying a driving current to the laser, the driving current determining the number of vertical modes.

According to an embodiment of the present invention the apparatus for measuring the displacement of a diffraction grating comprises a multi-mode semiconductor laser generating a laser beam having at least five vertical modes with an intensity ratio of at least 0.05; interference means for directing the laser beam from the laser to the diffraction grating and causing first and second diffracted light beams generated at the diffraction grating to interfere with each other to generate an interference light beam; and conversion means for converting the interference light beam supplied by the interference means into an electrical signal. The interference means is arranged to cause the optical path lengths of the first and second diffracted light beams to be substantially equal to each other. The laser is constructed to generate a laser beam having an envelop, half width, and coherence length that satisfy the values noted above.

According to another embodiment of the present invention the apparatus for measuring the displacement of a diffraction grating comprises a multi-mode semiconductor laser for generating laser beam; supply means for supplying a predetermined current to the laser so that at least five vertical modes occur in an oscillation spectrum of the laser beam generated by the laser at an intensity ratio of at least 0.05; interference means for splitting the laser beam generated by the laser into first and second beams, for directing the first and second beams to the diffraction grating, and for effecting interference between a first diffracted light beam generated by diffraction of the first beam at the diffraction grating and a second diffracted light beam generated by diffraction of the second beam at the diffraction grating to produce an interference light beam; and conversion means for converting the interference light beam supplied by the interference means into an electrical signal. The laser is constructed to generate a laser beam having an envelop, half width, and coherence length with the values noted above. In addition, the interference means is arranged to cause the optical path length of the first and second diffracted light beams to be substantially equal to each other.

Also disclosed is a method for measuring the displacement of a diffraction grating and comprises the steps of directing laser radiation with a predetermined spectrum having at least five vertical modes each having an intensity ratio of at least 0.05 to the diffraction grating; forming an interference beam from the diffraction beams generated at the diffraction grating; and converting the interference beam into an electrical signal. The forming step includes a step of superposing ±1-order diffraction beams generated by the diffraction grating to form the interference beam, the optical path lengths of the ±1-order beam being substantially equal. The directing step specifically comprises the step of directing to the diffraction grating laser radiation having an envelop which envelopes peaks of respective vertical modes of the oscillation spectrum, with the width of the envelop being no more than 6 nm and with the half width of each of the at least five vertical modes being at least 0.03 nm. In addition, the directing step can include the steps of providing a multi-mode semiconductor laser and supplying a predetermined current to the laser so to emit the laser radiation from the laser.

### BRIEF DESCRIPTION OF THE DRAWINGS

Fig. 1A is a graph of an oscillation spectrum of a multi-mode semiconductor laser used in an embodiment of the present invention;
Fig. 1B is a schematic diagram of an interferometer which incorporates a semiconductor laser having the oscillation spectrum shown in Fig. 1A;
Figs. 2(a) to 9(c) are graphs of the state of the coherency function when the half width and the spectral function are changed with respect to each oscillation mode of the semiconductor laser;
Figs. 10(a) to 17(c) are graphs of the state of the coherency function when the width of the envelop over the oscillation spectrum of the semiconductor laser is changed; and
Figs. 18(a) to 20(c) are graphs of the state of the coherency function when the shape of the envelop over the oscillation spectrum of the semiconductor laser is changed.

### DESCRIPTION OF THE PREFERRED EMBODIMENT

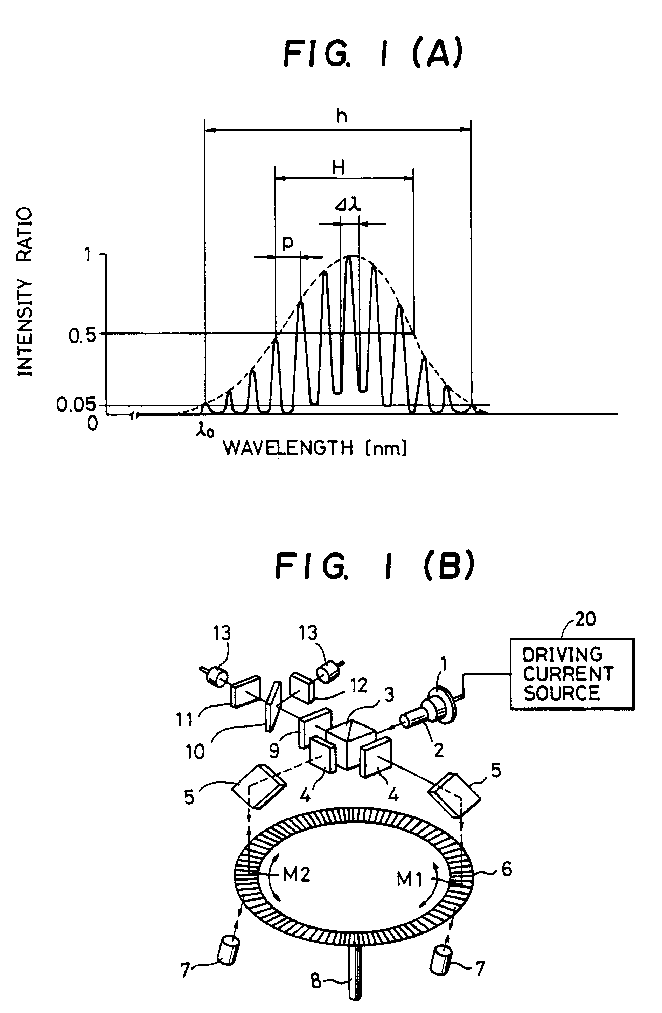

Figs. 1A and 1B illustrate features of an embodiment of the present invention; Fig. 1A is a graph of an oscillation spectrum of a multi-mode semiconductor laser 1 used in this embodiment; and Fig. 1B shows a rotary encoder for detecting a displacement, i.e., for detecting the angular change of the scale of a diffraction grating formed on a rotary scale.

Referring to Fig. 1B, the multi-mode semiconductor laser 1 outputs a laser light beam in accordance with the oscillation spectrum of Fig. 1A by receiving a driving signal supplied from a driving current source 20. A collimator lens 2 converts the laser light beam output from the semiconductor laser 1 into a parallel light beam and directs the same toward a polarizing prism 3. The polarizing prism 3 splits the laser light beam into two beams, one of P-polarized light and one of S-polarized light which pass through 1/4 wave plates 4 and turn-back mirrors 5 so as to be incident upon a diffraction grating on a rotary scale 6 at positions M₁ and M₂. Transmission-diffracted light beams diffracted at the positions M₁ and M₂ (±1-order diffraction lights) are reflected by reflection optical systems 7, are directed toward the positions M₁ and M₂ again and are diffracted at these positions again. The rediffracted light beams diffracted at the position M₁ and M₂ again are returned to the polarizing prism 3 via the turn-back mirrors 5 and the 1/4 wave plates and are superposed on each other by the polarizing prism 3. The superposed beam is changed into beams of circular polarized light of opposite rotations by a 1/4 wave plate 9 and is split into two beams by a beam splitter 10. Each of these split beams is directed toward one of two photodetectors 13 through a polarizing plate 11 or 12. The polarizing plates 11 and 12 are disposed so that the polarizing directions of the two beams are shifted by 90° from each other, thereby enabling the two photodetectors 13 to receive beams of light having phases shifted by 90° from each other. Interference fringes (monochromatic) are formed on the light receiving surface of each photodetector 13 as a result of interference between the two beams of diffracted light. The brightness of the interference fringes is changed as the rotary scale 6 rotates about a rotary shaft 8. It is therefore possible to measure the state of rotation of the rotary scale 6, i.e., the displacement of the diffraction grating, by detecting a photoelectric conversion signal obtained from each photodetector 13.

If, as shown in Fig. 1A, the number of vertical modes having an intensity ratio equal to or higher than 0.05 is denoted by N; the half width of each vertical mode is denoted by Δλ [nm]; the half width of the envelop of the range of intensity ratio of the oscillation spectrum equal to or higher than 0.05 is denoted by h [nm]; a representative oscillation wavelength is denoted by λ₀ [nm], and the distance between the vertical modes is denoted by P [nm], then the semiconductor laser of this embodiment satisfies the following equations:
(1) N ≧ 5
(2) h ≦ 6 nm
(3) Δλ ≧ 0.03 nm
If the number of oscillation modes becomes smaller and if N is 4 or less, one or two vertical modes are dominant for interference, and a representative λ₀ oscillation wavelength therefore changes discretely (a mode whip takes place) as the temperature of the environment of the laser changes. As a consequence, the laser can be stabilized against changes in environmental temperature by setting N ≧ 5 as represented in equation (1).

In a case where a light source having a limited coherence length such as a multi-mode semiconductor laser is used for the interferometer, it is necessary to limit variations in the difference between the optical path lengths of the two beams including those due to thermal expansion of the frame of the interferometer to the range of the coherence length. Unless the variations are limited to this range, there is a possibility of failure to obtain any interference signal (corresponding to changes of brightness of the interference light). In the case of an interferometer such as the encoder shown in Fig. 1B in which the phase of diffracted light is modulated in accordance with displacements of the diffraction grating, there is no need to change the difference between the optical path lengths of the two beams. This type of interferometer is therefore constructed in such a manner that the difference between the optical path lengths of the two beams is set close to zero at the time of assembly so as to be limited to the range of the coherence length of the light source even if it is changed by thermal expansion of the frame of the interferometer.

To adjust the difference between the optical path lengths, the positions of the optical elements including the mirrors 5 and the optical systems 7 may be adjusted. To equalize the optical path lengths of the two beams in an error range of ± 10 »m, the positions of the optical elements may be adjusted by using a screw feed mechanism (not shown) or the like. The optical path lengths can be easily adjusted in this manner. Consequently, if the coherence length of the light source is sufficiently large with respect to the range of errors in positioning the mirrors and so on, and is not less than 100 »m, the illustrated type of interferometer can be adjusted at the time of assembly and measurement so that the degree of interference (visibility or contrast of interference fringes) is optimized.

If the coherence length of the light source can be determined with numerical values, the spectral band width can be approximated by calculation using a Fourier transformation. However, it is necessary that a function of the degree of interference and the optical path difference (i.e., the coherency function) are previously known. Because the coherency functions of semiconductor lasers cannot be generalized, we obtained a coherency function by simulation from a spectral function which can be generalized with several parameters, obtained the range of the spectral function satisfying a coherence length of 100 »m or more (a conditional equation of parameters expressing the spectral function), and selected a multi-mode semiconductor laser suitable for use in the desired type of interferometer.

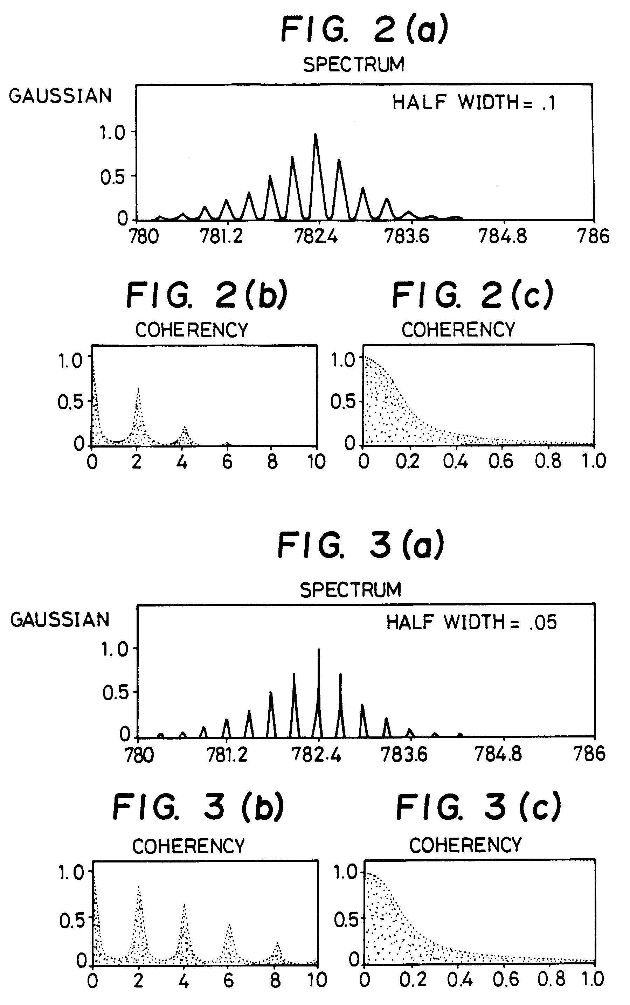

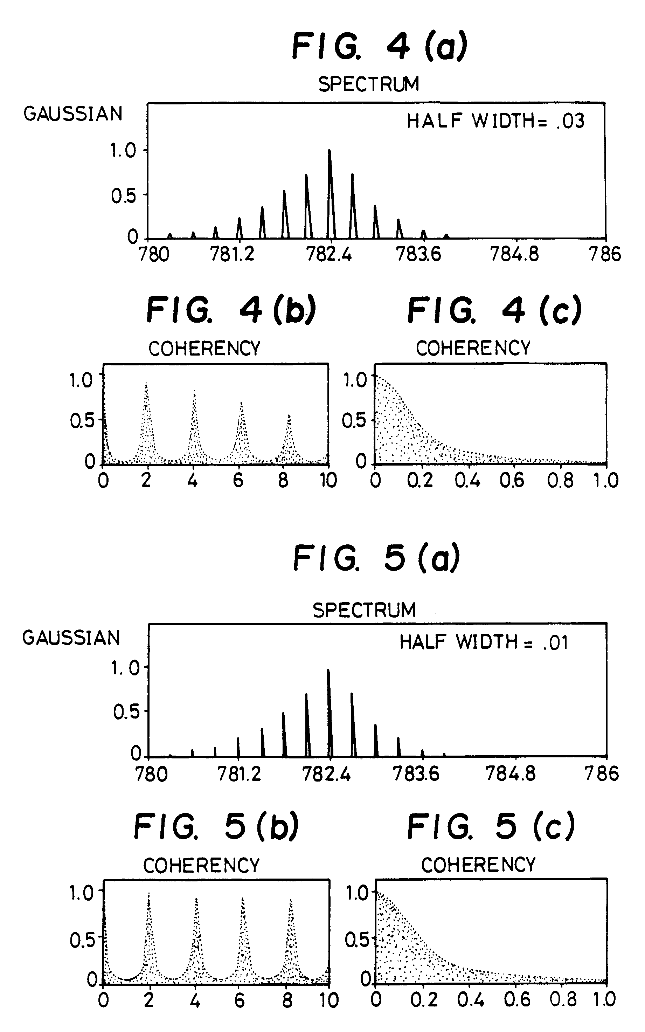

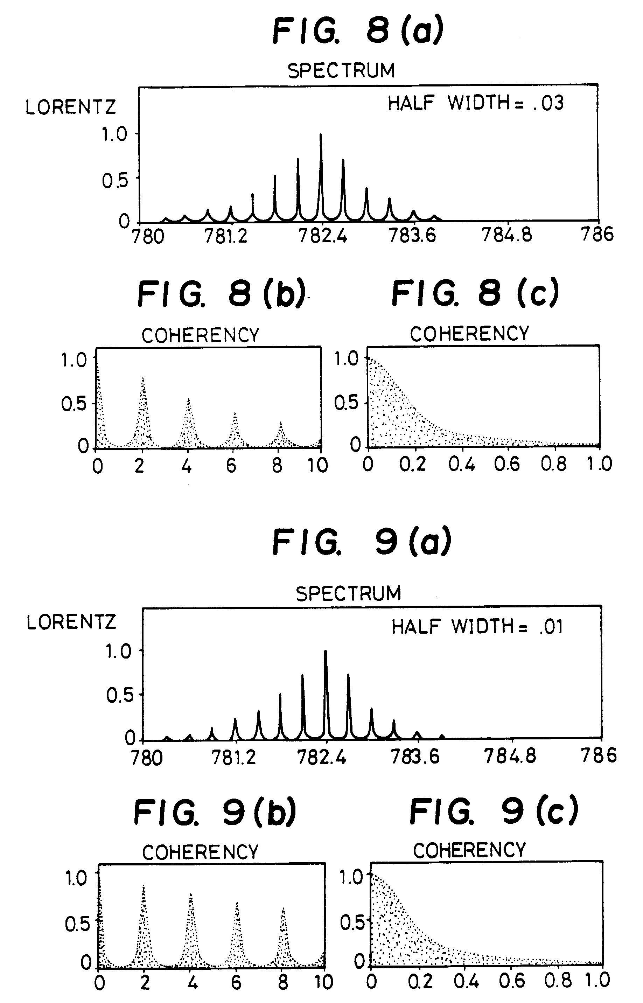

Figs. 2(a) to 2(c) to Fig. 9(a) to 9(c) are graphs of simulation in which variations in the coherency function of a multi-mode laser having a reference wavelength of λ₀ = 780 nm and a mode interval of P = 0.3 nm were obtained when parameters Δλ, H and h were changed. All the results shown in the graphs were obtained by a Fourier transformation of the spectral function. In Figs. 2(a) to 2(c) and all subsequent figures, figures denoted (a) illustrate the spectral function, figures denoted (b) illustrate the coherency function, and figures denoted (c) illustrate enlargement of the coherency function of corresponding figures denoted (b) in the vicinity of zero. The unit of measure of the abscissa of figures denoted (a) is [nm], and the unit of the abscissa of figures denoted (b) and (c) is [mm]. The abscissas of (b) and (c) represent optical path differences, and the ordinates of (b) and (c) represent coherency.

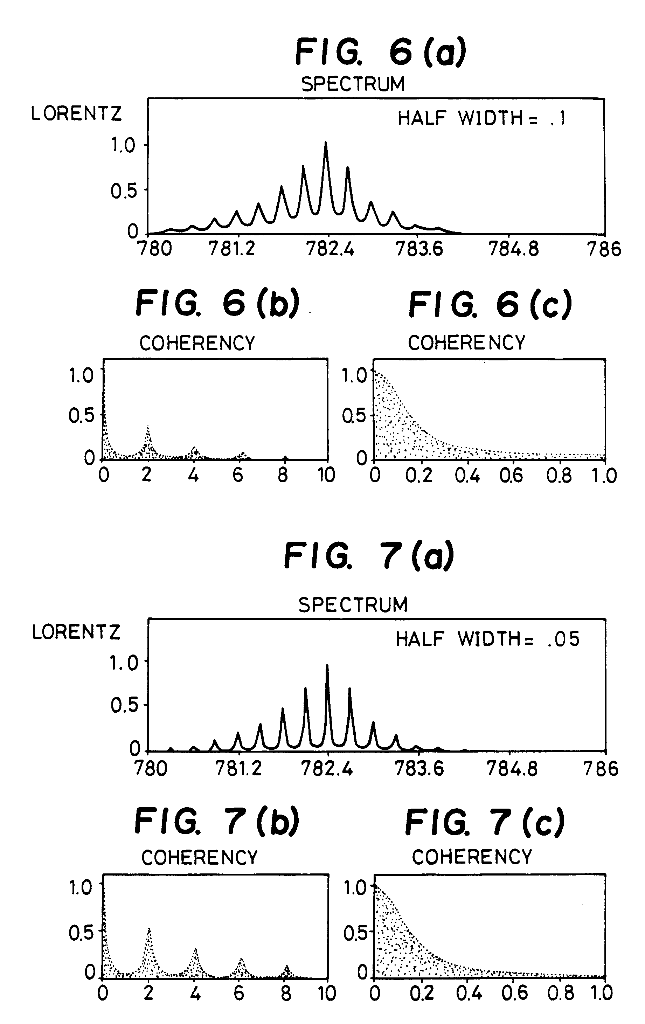

Referring to Figs. 2(a) to 2(c), to 5(a) to 5(c), the coherency function was obtained by assuming a Gaussian type of spectral function of respective modes and changing the half width Δλ within a range of 0.1 to 0.01 nm. Referring to Figs. 6(a) to 6(c), to 9 (a) to 9(c), the coherency function was obtained by assuming a Lorentz type of spectral function of respective modes and changing the half width Δλ within a range of 0.1 to 0.01 nm. As is apparent from these graphs, there are a plurality of peaks in the coherency function of the multi-mode semiconductor laser having a plurality of discrete oscillation modes (vertical modes). The smaller the half width Δλ of each mode, the larger the number of peaks. If the environmental temperature changes during use of an encoder utilizing interference of diffracted light beams, the reference wavelength λ₀ changes. Changes in the phase of the interference signal and, hence, measurement errors due to changes in the reference wavelength can be reduced if the difference between the optical path lengths of the two beams is very small or '0'.

If the interferometer is adjusted in such a manner that the interference intensity is maximized when the optical path lengths of the two beams are not equal to each other, measurement errors are increased, because a plurality of peaks appear in the coherency function. As a consequence, by using a multi-mode semiconductor laser having vertical modes with a predetermined half width Δλ, it is possible to limit high-order peaks and eliminate obscurity in adjustment for equalizing the optical path lengths. The condition therefor can be expressed as Δλ ≧ 0.03 nm as represented by equation (3).

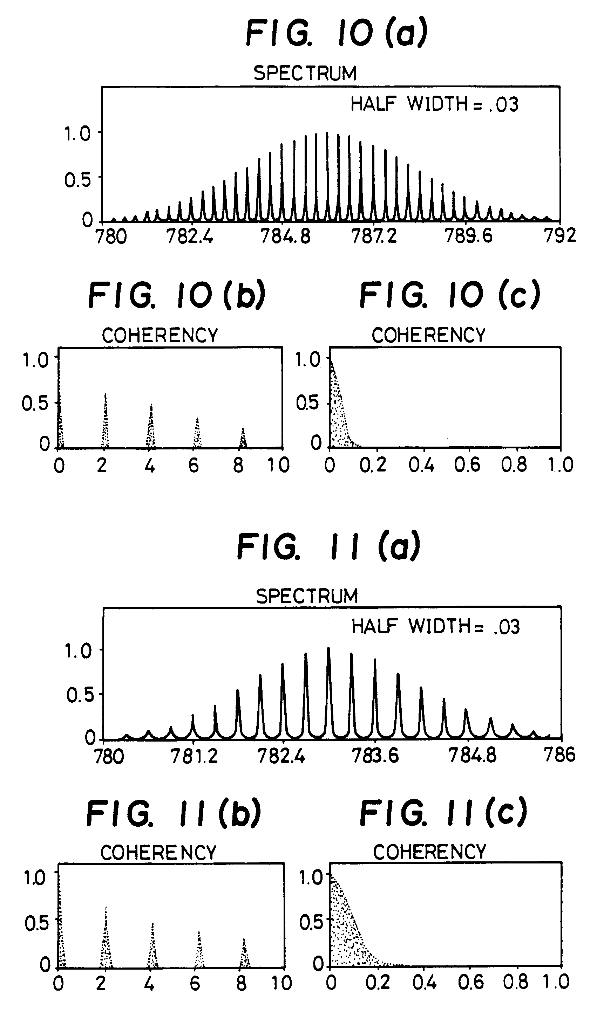

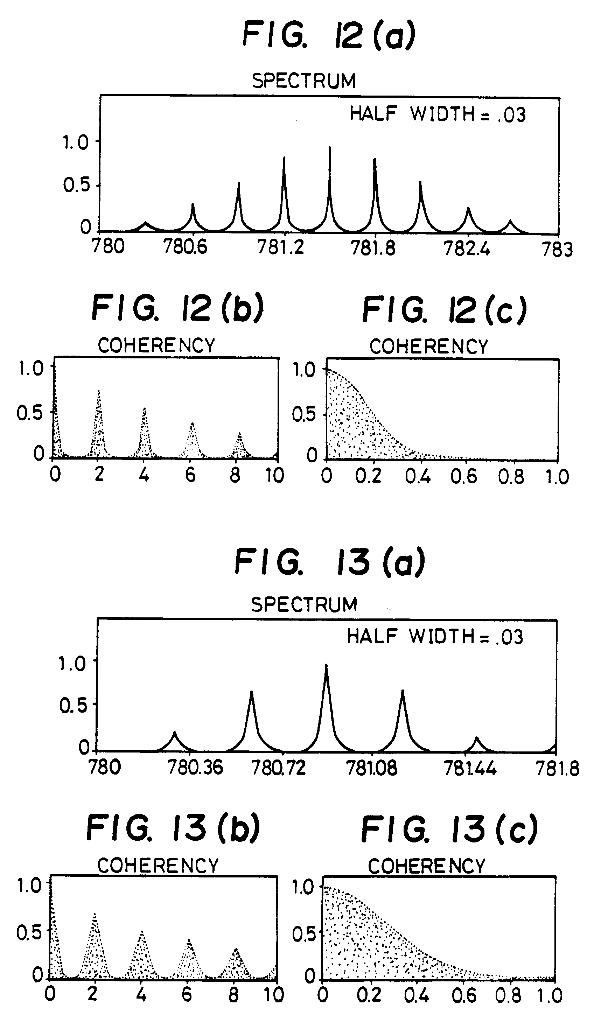

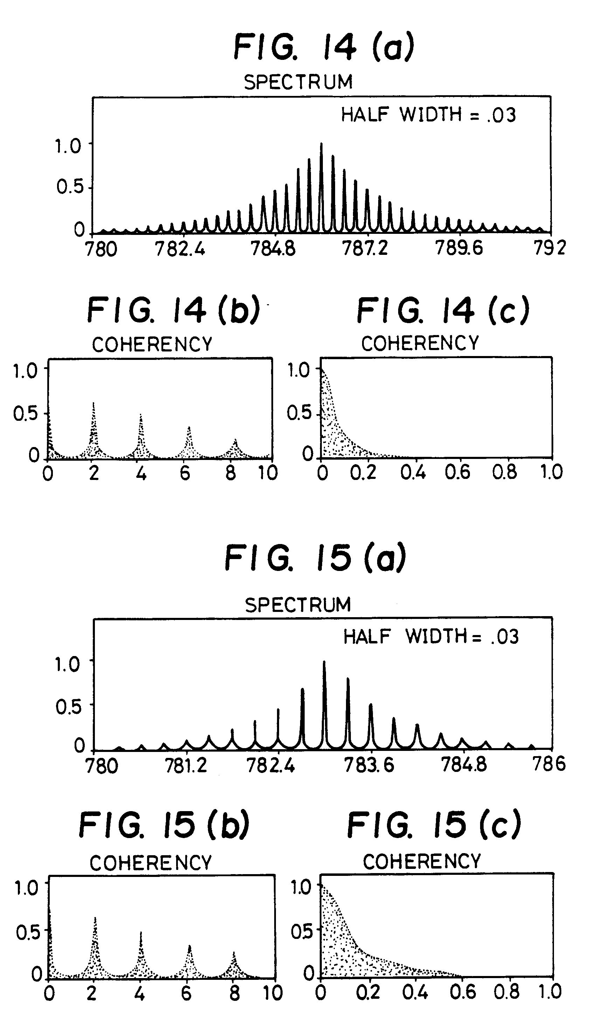

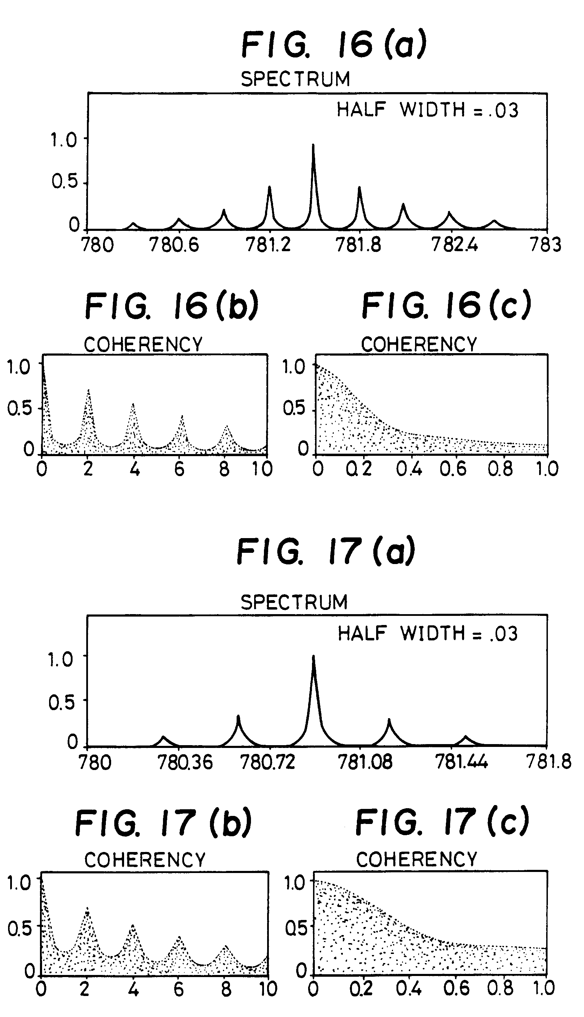

Referring to Figs. 10 (a) to (c) to Figs. 13 (a) to 13(c), the coherency function was obtained by assuming that the envelop over the oscillation spectrum can be represented by a Gaussian function (H/h = const) and by changing the number of modes with an intensity ratio of 0.05 or higher within the envelop from 40 to 50. Referring to Figs. 14 (a) to (c) to Figs. 17 (a) to 13(c), the coherency function was obtained by assuming that the envelop over the oscillation spectrum can be represented by a Lorentz function (H/h = const) and by changing the width h of the envelop at an intensity ratio of 0.05 or higher from 12 to 1.5 nm. In can be understood that in either case the coherency abruptly decreases if the spread of the envelop increases. The width h and the coherence length are generally inversely proportional to each other. In a region where the optical path difference is close to zero, the coherency does not depend upon the types of the functions representing the envelop. In consequence, the width h obtained for setting the coherence length to 100 »m or more is equal to or smaller than 6 nm, as represented by equation (2).

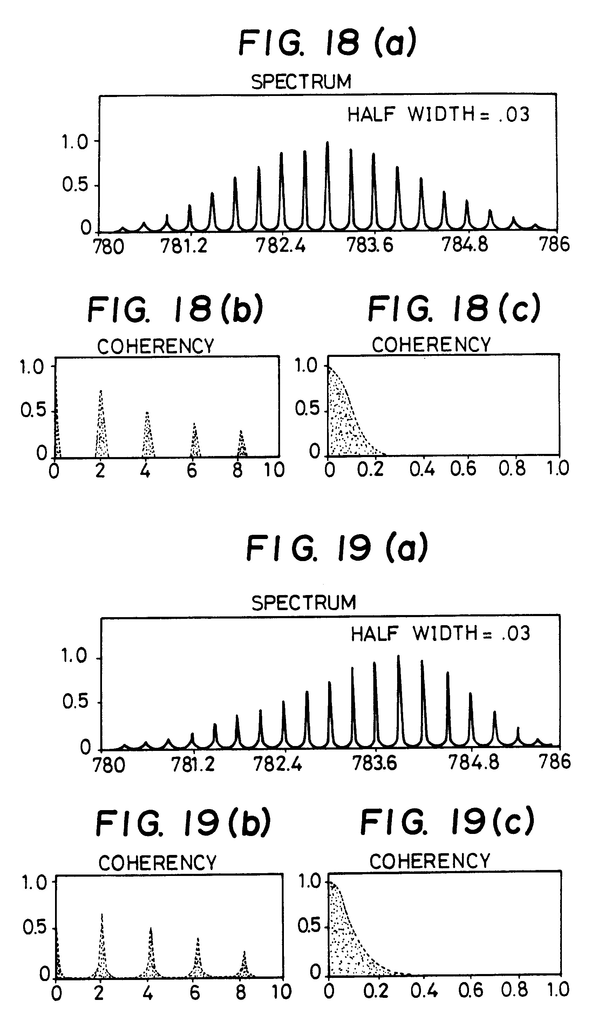

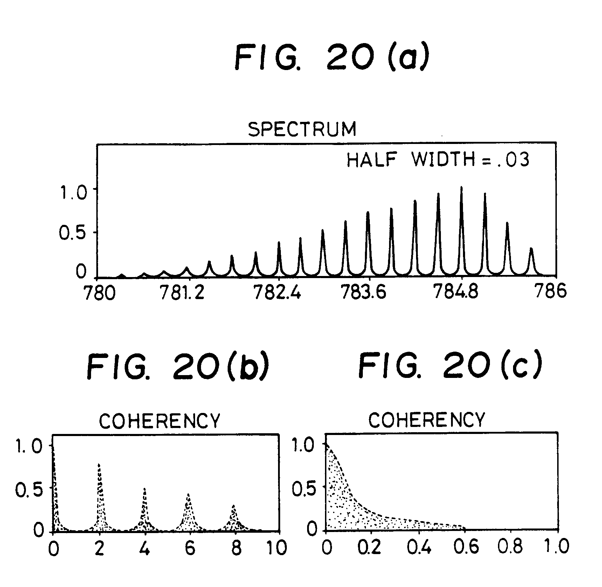

Referring to Figs. 18 (a) to (c) to Figs. 20 (a) to 20(c), the coherency function was obtained by shifting the reference wavelength λ₀ while constantly maintaining the width h of the envelop over the spectrum at an intensity ratio of 0.05 or higher so as to change the shape of the envelop. It can be clearly understood that the shape of the envelop of the spectrum does not substantially influence the coherency for an optical path length of a range of 0 to 0.1.

To obtain the semiconductor laser satisfying the conditions defined by equations (1) to (3), it is necessary to select the type of semiconductor laser, the driving current, the reference environmental temperature, and so on, as desired. The above-described effects can be achieved by employing a semiconductor laser satisfying those conditions as the light source of the interferometer.

In the encoder shown in Fig. 1B, the optical system is constructed in such a manner that the optical path lengths of a pair of diffracted light beams generated at the positions M₁ and M₂ and made to interfere with each other are substantially equal to each other. The driving current (signal) of the driving current source 20 for driving the semiconductor laser 1 can be changed, and a predetermined current (signal) is applied to the semiconductor laser 1 so that the oscillation spectrum of the semiconductor laser 1 satisfies the above-described conditions defined by equations 1 to 3. The present invention is therefore effective in that even if an optical path difference is produced by thermal expansion of the frame of the interferometer, the resulting reduction in the signal amplitude is very small and the occurrence of a discontinuity of the signal phase can be avoided.

The embodiment illustrated in Figs. 1A and 1B relates a rotary encoder, but the present invention can also be applied to linear encoders. Also, the present invention can be applied to various types of optical measurement apparatus using lasers other than encoders.

## Claims

1. An apparatus for measuring the displacement of a diffraction grating (6), comprising:
optical means (2 - 5, 7, 9 - 12) for directing a laser beam from a laser (1) to said diffraction grating (6) and causing first and second diffracted light beams generated at said diffraction grating (6) to interfere with each other to generate interference light, with the phase of said interference light changing accordingly to said displacement of said diffraction grating (6); and
conversion means (13) for converting said interference light supplied by said optical means (2 - 5, 7, 9 - 12) into an electrical signal to measure said displacement of said diffraction grating (6),
characterized in that
said laser beam is generated by a multi-mode semiconductor laser (1) and has at least five vertical modes (N) each having an intensity ratio with respect to a maximum vertical mode peak of at least 0.05, and
said laser beam has an envelope which envelopes peaks of the respective vertical modes (N) each having an intensity ratio of at least 0.05 with respect to a maximum vertical mode peak in the oscillation spectrum and which envelope has a width (h) of no greater than 6 nm.

2. An apparatus according to Claim 1, characterized in that said laser (1) is constructed to generate said laser beam such that the half width (Δλ) of each of said at least five vertical modes (N) is at least 0.03 nm.

3. An apparatus according to Claim 1, characterized in that said laser (1) is constructed to generate said laser beam having a coherence length of at least 100 »m.

4. An apparatus according to Claim 1, characterized in that said optical means (2 - 5, 7, 9 - 12) is arranged to cause the optical paths of the first and second diffracted light beams to be substantially equal to each other.

5. An apparatus for measuring the displacement of a diffraction grating (6), comprising:
a semiconductor laser (1) for generating a laser beam;
optical means (2 - 5, 7, 9 - 12) for splitting said laser beam generated by said laser (1) into first and second beams, for directing said first and second beams to said diffraction grating (6), and for effecting interference between a first diffracted light beam generated by diffraction of said first beam at said diffraction grating (6) and a second diffracted light beam genereated by diffraction of said second beam at said diffraction grating (6) to produce interference light, with the phase of said interference light changing accordingly to said displacement of said diffraction grating (6); and
conversion means (13) for converting said interference light produced by said optical means (2 - 5, 7, 9 - 12) into an electrical signal to measure said displacement of said diffraction grating (6)
characterized in that
said laser (1) is a multi-mode semiconductor laser which is supplied with a predetermined current by supply means (20) so that at least five vertical modes (N) occur in an oscillation spectrum of said laser beam generated by said laser (1) at an intensity ratio with respect to a maximum vertical mode peak of at least 0.05, and
said laser beam has an envelope which envelopes peaks of the respective vertical modes (N) each having an intensity ratio of at least 0.05 with respect to a maximum vertical mode peak in the oscillation spectrum and which envelope has a width (h) of no greater than 6 nm.

6. An apparatus according to Claim 5, characterized in that said laser (1) is constructed to generate said laser beam such that the half width (Δλ) of each of said at least five vertical modes (N) is at least 0.03 nm.

7. An apparatus according to Claim 5, characterized in that said laser (1) is constructed to generate said laser beam having a coherence of at least 100 »m.

8. An apparatus according to Claim 5, characterized in that said optical means (2 - 5, 7, 9 - 12) is arranged to cause the optical paths of said first and second diffracted light beams to be substantially equal to each other.

9. A method of measuring the displacement of a diffraction grating (6), comprising the steps of:
directing to said diffraction grating (6) laser radiation;
forming interference light by diffraction beams generated at said diffraction grating (6), with the phase of said interference light changing accordingly to said displacement of said diffraction grating (6); and
converting the interference beam into an electrical signal to measure said displacement of said diffraction grating (6),
characterized in that
said laser radiation is effected by means of a laser (1) operated to produce a predetermined spectrum having at least five vertical modes (N) each having an intensity ratio with respect to a maximum vertical mode peak of at least 0.05, and said laser radiation has an envelope which envelopes peaks of the respective vertical modes (N) each having an intensity ratio of at least 0.05 with respect to a maximum vertical mode peak in the oscillation spectrum and which envelope has a width (h) of no greater than 6 nm.

10. A method accordin to Claim 9, characterized in that said forming step includes a step of superposing ±1-order diffraction beams generated by said diffraction grating (6) to form the interference beam, the optical path lenghts of the ±1-order diffraction beams being substantially equal.

11. A method according to Claim 10, characterized in that the half width (Δλ) of each of said at least five vertical modes (N) is at least 0.03 nm.

12. A method according to Claim 10, characterized in that said directing step includes the steps of:
providing a multi-mode semiconductor laser (1); and
supplying a predetermined current to said laser (1) so as to emit said laser radiation from said laser (1).

13. An encoder having a diffraction grating scale, comprising:
a semiconductor laser (1) generating a laser beam;
optical means (2 - 5, 7, 9 - 12) for splitting said laser beam generated by said laser (1) into first and second beams, for directing said first and second beams to first and second positions (M₁, M₂) on said diffraction grating, and for effecting interference between a first diffracted light beam from said first position (M₁) and a second diffracted light beam from said second position (M₂) to produce interference light with the phase of said interference light changing accordingly to a displacement of said diffraction grating; and
conversion means (13) for converting said interference light produced by said optical means (2 - 5, 7, 9 - 12) into an electrical signal and measuring said displacement of said diffraction grating;
characterized in that
said encoder is an rotary encoder with said diffraction grating being a rotary scale (6) formed along a rotation direction;
said laser is a multi-mode semiconductor laser (1) which generates said laser beam so that said beam has at least five vertical modes (N) each having an intensity ratio with respect to a maximum vertical mode peak of at least 0.05;
said laser beam has an envelope which envelopes peaks of the respective vertical modes (N) each having an intensity ratio of at least 0.05 with respect to a maximum vertical mode peak in the oscillation spectrum and which envelope has a width (h) of no greater than 6 nm; and
said displacement to be measured is a rotation of said rotary scale (6).

14. An encoder according to Claim 13, characterized in that said first and second positions (M₁, M₂) are symmetric with respect to the axis of rotation (8) of said rotary scale (6).

## Patentansprüche

1. Vorrichtung zur Messung der Verschiebung eines Beugungsgitters (6), umfassend:
eine optische Einrichtung (2 bis 5, 7, 9 bis 12), um einen Laserstrahl von einem Laser (1) auf das Beugungsgitter (6) zu richten und erste und zweite gebeugte Lichtstrahlen, die an dem Beugungsgitter (6) erzeugt worden sind, miteinander unter Erzeugung von Interferenzlicht interferieren zu lassen, wobei die Phase des Interferenzlichts sich gemäß der Verschiebung des Beugungsgitters (6) verändert; und
eine Umwandlungseinrichtung (13), um das Interferenzlicht, das durch die optische Einrichtung (2 bis 5, 7, 9 bis 12) zugeführt wird, in ein elektrisches Signal zur Messung der Verschiebung des Beugungsgitters (6) umzuwandeln,
dadurch gekennzeichnet, daß
der Laserstrahl von einem Multimoden-Halbleiterlaser (1) erzeugt wird und mindestens fünf vertikale Moden (N) jeweils mit einem Intensitätsverhaltnis bezüglich des maximalen Vertikalmoden-Spitzenwerts von mindestens 0,05 hat, und
daß der Laserstrahl eine Einhüllende hat, die Maxima der jeweiligen Vertikalmoden (N), die jeweils ein Intensitätsverhältnis von mindestens 0,05 bezüglich des maximalen Vertikalmoden-Spitzenwerts in dem Schwingungsspektrum haben, einhüllt und wobei die Einhüllende eine Breite (h) von nicht größer als 6 nm hat.

2. Vorrichtung nach Anspruch 1, dadurch gekennzeichnet, daß der Laser (1) so aufgebaut ist, daß er den Laserstrahl so erzeugt, daß die Halbwertsbreite (Δλ) von jeder der mindestens fünf vertikalen Moden (N) mindestens 0,03 nm beträgt.

3. Vorrichtung nach Anspruch 1, dadurch gekennzeichnet, daß der Laser (1) so aufgebaut ist, daß er den Laserstrahl mit einer Kohärenzlänge von mindestens 100 »m erzeugt.

4. Vorrichtung nach Anspruch 1, dadurch gekennzeichnet, daß die optischen Einrichtung (2 bis 5, 7, 9 bis 12) so angeordnet ist, daß als Folge die optischen Wege des ersten und zweiten gebeugten Lichtstrahls im wesentlichen einander gleich sind.

5. Vorrichtung zur Messung der Verschiebung eines Beugungsgitters (6), umfassend: einen Halbleiter-Laser (1) zur Erzeugung eines Laserstrahls;
eine optische Einrichtung (2 bis 5, 7, 9 bis 12), um den von dem Laser (1) erzeugten Laserstrahl in erste und zweite Strahlen zu teilen, um den ersten und zweiten Strahl auf das Beugungsgitter (6) zu richten und einen ersten gebeugten, durch Beugung des ersten Strahls an dem Beugungsgitter (6) erzeugten Lichtstrahl und einen zweiten gebeugten, durch Beugung des zweiten Strahls an dem Beugungsgitter (6) erzeugten Lichtstrahl unter Erzeugung von Interferenzlicht miteinander interferieren zu lassen, wobei sich die Phase des Interferenzlichts gemäß der Verschiebung des Beugungsgitters (6) verändert; und
eine Umwandlungseinrichtung (13), um das Interferenzlicht, das durch die optische Einrichtung (2 bis 5, 7, 9 bis 12) erzeugt worden ist, in ein elektrisches Signal zur Messung der Verschiebung des Beugungsgitters (6) umzuwandeln,
dadurch gekennzeichnet, daß
der Laser (1) ein Multimoden-Halbleiterlaser ist, der mit einem vorbestimmten Strom durch Versorgungseinrichtungen (20) versorgt wird, so daß mindestens fünf vertikale Moden (N) in einem Schwingungsspektrum des Laserstrahls, der durch den Laser (1) erzeugt wird, bei einem Intensitätsverhältnis bezüglich des maximalen Vertikalmoden-Spitzenwerts von mindestens 0,05 auftreten, und
daß der Laserstrahl eine Einhüllende hat, die Maxima der jeweiligen Vertikalmoden (N), die jeweils ein Intensitätsverhältnis von mindestens 0,05 bezüglich des maximalen Vertikalmoden-Spitzenwerts in dem Schwingungsspektrum haben, einhüllt und wobei die Einhüllende eine Breite (h) von nicht größer als 6 nm hat.

6. Vorrichtung nach Anspruch 5, dadurch gekennzeichnet daß der Laser (1) aufgebaut ist, um den Laserstrahl erzeugen, so daß die Halbwertsbreite (Δλ) von jeder der mindestens fünf Vertikalmoden (N) mindestens 0,03 nm ist.

7. Vorrichtung nach Anspruch 5, dadurch gekennzeichnet, daß der Laser (1) aufgebaut ist, so daß er den Laserstrahl mit einer Kohärenz von mindestens 100 »m erzeugt.

8. Vorrichtung nach Anspruch 5, dadurch gekennzeichnet, daß die optische Einrichtung (2 bis 5, 7, 9 bis 12) so angeordnet ist, daß als Folge die optischen Wege des ersten und zweiten gebeugten Lichtstrahls im wesentlichen einander gleich sind.

9. Verfahren zur Messung der Verschiebung eines Beugungsgitters (6), umfassend die folgenden Schritte:
Richten von Laserstrahlung auf das Beugungsgitter (6);
Bildung von Interferenzlicht durch an dem Beugungsgitter (6) erzeugte Beugungsstrahlen, wobei die Phase des Interferenzlichts sich gemäß der Verschiebung des Beugungsgitters (6) verändert; und
Umwandlung des Interferenzstrahls in ein elektrisches Signal zur Messung der Verschiebung des Beugungsgitters (6),
dadurch gekennzeichnet, daß
die Laserstrahlung mit Hilfe eines Lasers (1) bewirkt wird, der unter Erzeugung eines vorbestimmten Spektrums betrieben wird, das mindestens fünf vertikale Moden (N) jeweils mit einem Intensitätsverhältnis bezüglich des maximalen Vertikalmoden-Spitzenwerts von mindestens 0,05 hat, und daß die Laserstrahlung eine Einhüllende hat, die Maxima der jeweiligen Vertikalmoden (N), die jeweils ein Intensitätsverhältnis von mindestens 0,05 bezüglich des maximalen Vertikalmoden-Spitzenwerts in dem Schwingungsspektrum haben, einhüllt und wobei die Einhüllende eine Breite (h) von nicht größer als 6 nm hat.

10. Verfahren nach Anspruch 9, dadurch gekennzeichnet, daß der Schritt zur Bildung von Interferenzlicht einen Schritt umfaßt, bei dem die Beugungsstrahlen ± 1. Ordnung, die von dem Beugungsgitter (6) erzeugt worden sind, unter Erzeugung des Interferenzstrahls überlagert werden, wobei die optischen Weglängen der Beugungsstrahlen + 1. Ordnung im wesentlichen gleich sind.

11. Verfahren nach Anspruch 10, dadurch gekennzeichnet, daß die Halbwertsbreite (Δλ) von jeder der mindestens 5 Vertikalmoden (N) mindestens 0,03 nm ist.

12. Verfahren nach Anspruch 10, dadurch gekennzeichnet, daß der Schritt zum Richten von Laser-Strahlung auf das Beugungsgitter die folgenden Schritte umfaßt:
Bereitstellen eines Multimoden-Halbleiterlasers (1); und
Zuführen eines vorbestimmten Stroms zu dem Laser (1), so daß Laserstrahlung von dem Laser (1) emittiert wird.

13. Codiereinrichtung mit einer Beugungsgitterskala, umfassend:
einen einen Laserstrahl erzeugenden Halbleiter-Laser (1);
eine optische Einrichtung (2 bis 5, 7, 9 bis 12), um den von dem Laser (1) erzeugten Laserstrahl in einen ersten und zweiten Strahl zu teilen, um den ersten und zweiten Strahl auf eine erste und zweite Position (M₁, M₂) auf dem Beugungsgitter zu richten und einen ersten gebeugten Lichtstrahl von der ersten Position (M₁) und einen zweiten gebeugten Lichtstrahl von der zweiten Position (M₂) unter Erzeugung von Interferenzlicht miteinander interferieren zu lassen, wobei die Phase des Interferenzlichts sich gemäß der Verschiebung des Beugungsgitters verändert; und
eine Umwandlungseinrichtung (13), um das Interferenzlicht, das von der optischen Einrichtung (2 bis 5, 7, 9 bis 12) erzeugt worden ist, in ein elektrisches Signal umzuwandeln und die Verschiebung des Beugungsgitters zu messen;
dadurch gekennzeichnet, daß
die Codiereinrichtung eine Drehcodiereinrichtung ist, wobei das Beugungsgitter eine entlang einer Drehrichtung gebildete Drehskala (6) ist;
der Laser ein Multimoden-Halbleiterlaser (1) ist, der den Laserstrahl erzeugt, so daß der Strahl mindestens fünf vertikale Moden (N) jeweils mit einem Intensitätsverhältnis bezüglich des maximalen Vertikalmoden-Spitzenwerts von mindestens 0,05 hat;
der Laserstrahl eine Einhüllende hat, die Maxima der jeweiligen Vertikalmoden (N), die jeweils ein Intensitätsverhältnis von mindestens 0,05 bezüglich des maximalen Vertikalmoden-Spitzenwerts in dem Schwingungsspektrum haben, einhüllt und wobei die Einhüllende eine Breite (h) von nicht größer als 6 nm hat; und
die zu messende Verschiebung eine Drehung der Drehskala (6) ist.

14. Codiereinrichtung nach Anspruch 13, dadurch gekennzeichnet, daß die erste und zweite Position (M₁, M₂) hinsichtlich der Drehachse (8) der Drehskala (6) symmetrisch sind.

## Revendications

1. Appareil pour mesurer le déplacement d'un réseau de diffraction (6), comprenant:
des moyens optiques (2 - 5, 9 - 12) pour diriger un faisceau laser en provenance d'un laser (1) vers ledit réseau de diffraction (6) et faisant interférer des premier et second faisceaux lumineux diffractés générés au niveau dudit réseau de diffraction (6) l'un avec l'autre pour générer de la lumière d'interférence, la phase de ladite lumière d'interférence variant en fonction dudit déplacement dudit réseau de diffraction (6); et
un moyen de conversion (13) pour convertir ladite lumière d'interférence envoyée par lesdits moyens optiques (2 - 5, 7, 9 - 12) en un signal électrique afin de mesurer le déplacement dudit réseau de diffraction (6),
caractérisé en ce que
ledit faisceau laser est généré par un laser (1) à semiconducteur multimode et a au moins cinq modes verticaux (N) ayant chacun un rapport d'intensité par rapport à un pic de mode vertical maximum d'au moins 0,05, et
ledit faisceau laser a une enveloppe qui enveloppe des pics des modes verticaux respectifs (N) ayant chacun un rapport d'intensité d'au moins 0,05 par rapport à un pic de mode vertical maximum dans le spectre d'oscillation et l'enveloppe ayant une largeur (h) non supérieure à 6 nm.

2. Appareil selon la revendication 1, caractérisé en ce que ledit laser (1) est réalisé pour générer ledit faisceau laser de telle sorte que la demi-largeur (Δλ) de chacun desdits au moins cinq modes verticaux (N) est d'au moins 0,03 nm.

3. Appareil selon la revendication 1, caractérisé en ce que ledit laser (1) est réalisé pour générer ledit faisceau laser ayant une longueur de cohérence d'au moins 100 »m.

4. Appareil selon la revendication 1, caractérisé en ce que lesdits moyens optiques (2 - 5, 7, 9 - 12) sont agencés pour que les trajets optiques des premier et second faisceaux lumineux diffractés soient sensiblement égaux l'un à l'autre.

5. Appareil pour mesurer le déplacement d'un réseau de diffraction (6), comprenant:
un laser (1) à semiconducteur pour générer un faisceau laser; des moyens optiques (2 - 5, 7, 9 - 12) pour séparer ledit faisceau laser généré par ledit laser (1) en des premier et second faisceaux, pour diriger lesdits premier et second faisceaux vers ledit réseau de diffraction (6), et pour effectuer une interférence entre un premier faisceau lumineux diffracté généré par la diffraction dudit premier faisceau au niveau dudit réseau de diffraction (6) et un second faisceau lumineux diffracté généré par la diffraction dudit second faisceau lumineux au niveau dudit réseau de diffraction (6) afin de produire une lumière d'interférence, la phase de ladite lumière d'interférence variant en fonction dudit déplacement dudit réseau de diffraction (6); et
un moyen de conversion (13) pour convertir ladite lumière d'interférence produite par lesdits moyens optiques (2 - 5, 7, 9 - 12) en un signal électrique afin de mesurer ledit déplacement dudit réseau de diffraction (6)
caractérisé en ce que
ledit laser (1) est un laser à semiconducteur multimode qui est alimenté par un courant prédéterminé par un moyen d'alimentation (20) de telle sorte qu'au moins cinq modes verticaux (N) se produisent dans un spectre d'oscillation dudit faisceau laser généré par ledit laser (1) à un rapport d'intensité par rapport à un pic de mode vertical maximum d'au moins 0,05, et
ledit faisceau laser a une enveloppe qui enveloppe des pics des modes verticaux respectifs (N) ayant chacun un rapport d'intensité d'au moins 0,05 par rapport à un pic de mode vertical maximum dans le spectre d'oscillation et cette enveloppe ayant une largeur (h) non supérieure à 6 nm.

6. Appareil selon la revendication 5, caractérisé en ce que ledit laser (1) est réalisé pour générer ledit faisceau laser de telle sorte que la demi-largeur (Δλ) de chacun desdits au moins cinq modes verticaux (N) est d'au moins 0,03 nm.

7. Appareil selon la revendication 5, caractérisé en ce que ledit laser (1) est réalisé pour générer ledit faisceau laser ayant une cohérence d'au moins 100 »m.

8. Appareil selon la revendication 5, caractérisé en ce que lesdits moyens optiques (2 - 5, 7, 9 - 12) sont agencés pour que les trajets optiques desdits premier et second faisceaux lumineux diffractés soient sensiblement égaux l'un à l'autre.

9. Procédé de mesure du déplacement d'un réseau de diffraction (6), comprenant les étapes de :
direction vers ledit réseau de diffraction (6) du rayonnement laser;
formation de lumière d'interférence par des faisceaux de diffraction générés au niveau dudit réseau de diffraction (6), la phase de ladite lumière d'interférence variant en fonction dudit déplacement dudit réseau de diffraction (6); et
conversion du faisceau d'interférence en un signal électrique pour mesurer ledit déplacement dudit réseau de diffraction (6),
caractérisé en ce que
ledit rayonnement laser est effectué au moyen d'un laser (1) actionné pour produire un spectre prédéterminé ayant au moins cinq modes verticaux (N) ayant chacun un rapport d'intensité par rapport à un pic de mode vertical maximum d'au moins 0,05, et ledit rayonnement laser a une enveloppe qui enveloppe des pics des modes verticaux respectifs (N) ayant chacun un rapport d'intensité d'au moins 0,05 par rapport à un pic de mode vertical maximum dans le spectre d'oscillation et l'enveloppe ayant une largeur (h) non supérieure à 6 nm.

10. Procédé selon la revendication 9, caractérisé en ce que ladite étape de formation comporte une étape de superposition de faisceaux de diffraction d'ordre ±1 générés par ledit réseau de diffraction (6) pour former le faisceau d'interférence, les longueurs des trajets optiques des faisceaux de diffraction d'ordre ±1 étant sensiblement égales.

11. Procédé selon la revendication 10, caractérisé en ce que la demi-largeur (Δλ) de chacun desdits au moins cinq modes verticaux (N) est d'au moins 0,03 nm.

12. Procédé selon la revendication 10, caractérisé en ce que ladite étape de direction comporte les étapes de :
fourniture d'un laser (1) multimode à semiconducteur; et application d'un courant prédéterminé audit laser (1) de manière à émettre ledit rayonnement laser à partir dudit laser (1).

13. Codeur ayant une échelle de réseau de diffraction, comprenant:
un laser (1) à semiconducteur générant un faisceau laser;
des moyens optiques (2 - 5, 7, 9 - 12) pour séparer ledit faisceau laser généré par ledit laser (1) en des premier et second faisceaux, pour diriger lesdits premier et second faisceaux vers des première et seconde positions (M₁, M₂) sur ledit réseau de diffraction, et pour effectuer une interférence entre un premier faisceau lumineux diffracté depuis ladite première position (M₁) et un second faisceau lumineux diffracté depuis ladite seconde position (M₂) afin de produire de la lumière d'interférence, la phase de ladite lumière d'interférence variant en fonction d'un déplacement dudit réseau de diffraction; et un moyen de conversion (13) pour convertir ladite lumière d'interférence produite par lesdits moyens optiques (2 - 5, 7, 9 - 12) en un signal électrique et mesurer ledit déplacement dudit réseau de diffraction;
caractérisé en ce que
ledit codeur est un codeur rotatif, ledit réseau de diffraction étant une échelle rotative (6) formée le long d'une direction de rotation;
ledit laser est un laser (1) multimode à semiconducteur qui génère ledit faisceau laser de telle sorte que ledit faisceau a au moins cinq modes verticaux (N) ayant chacun un rapport d'intensité par rapport à un pic de mode vertical maximum d'au moins 0,05;
ledit faisceau laser a une enveloppe qui enveloppe des pics des modes verticaux respectifs (N) ayant chacun un rapport d'intensité d'au moins 0,05 par rapport à un pic de mode vertical maximum dans le spectre d'oscillation et cette enveloppe ayant une largeur (h) non supérieure à 6 nm; et ledit déplacement à mesurer est une rotation de ladite échelle rotative (6).

14. Codeur selon la revendication 13, caractérisé en ce que lesdites première et seconde positions (M₁, M₂) sont symétriques par rapport à l'axe de rotation (8) de ladite échelle rotative (6).
